# EUROPEAN PATENT SPECIFICATION

(11) **EP 2 228 341 B1**
(45) Date of publication and mention of the grant of the patent: **03.07.2013**
(21) Application number: 09154453.6
(22) Date of filing: 05.03.2009
(51) Int. Cl.: C01B 3/16, C01B 3/50, B01J 8/00, B01J 8/02

(54) **Adiabatic water gas shift - carbon dioxide removal system**
Adiabatisches System mit Wassergas-Shift und Kohlenstoffdioxidentfernung
Système adiabatique de conversion à la vapeur d'eau et d'élimination de dioxyde de carbone

(43) Date of publication of application: 15.09.2010
(73) Proprietor: General Electric Company, Schenectady, NY 12345 (US)
(72) Inventor: Bartlett, Michael, 80799, Munich (DE); Finkenrath, Matthias, 81927, Munich (DE); Hoffmann, Stephanie, 80995, Munich (DE)
(74) Representative: Szary, Anne Catherine

(56) References cited:
- EP-A- 1 364 910
- EP-A- 1 880 754
- EP-A- 1 920 827
- US-A- 4 476 683
- US-B1- 7 074 373

## Description

### FIELD OF THE INVENTION

This application relates generally to gas separation processes and apparatuses, and more specifically to methods and apparatuses for adiabatic, integrated carbon dioxide removal from syngas.

### BACKGROUND OF THE INVENTION

Water gas shift (WGS) reactors for the catalyst-driven conversion of carbon monoxide (CO) and water (H₂O) to hydrogen (H₂) and carbon dioxide (CO₂) are widely known in the chemical and petroleum industries. The reactors are also useful in processes relating to the conversion of fuels including gasoline, diesel, methanol, ethanol, natural gas, and coal, to hydrogen or hydrogen-rich synthesis gases for use in the generation of electricity by fuel cells for use in, e.g., fuel cell vehicles, mobile power, home electricity, and stationary power applications like power plants.

The reversibility of the WGS reaction at equilibrium ordinarily results in an inefficient reaction necessitating a bulky reactor and producing a H₂ product contaminated with a high concentration of unconverted CO together with an undesirable concentration of CO₂. Accordingly, the removal of CO₂ from the reaction mixture is desirable.

According to recent developments, an advanced CO₂ separation membrane is integrated into the water gas shift reactor. The removal of CO₂ from the reaction mixture by this membrane drives the CO oxidation and simplifies the layout of the plant. However, the water gas shift reaction is exothermic and, thus, the heat flows need to be properly managed to ensure a cost effective and efficient plant design. Moreover, active cooling of the membrane during the water gas shift reaction has been suggested to maximize removal of carbon dioxide. Regarding the heat which is absorbed by a cooling medium and which is finally set free by the cooling medium and the sensible heat of the gaseous reaction products, it has been proposed in the state of the art that a power cycle should extract work from the heat. However, such measurements result in a complex plant-heat and mass integration.

Hence, there continues to be a need for highly efficient and simplified CO conversion and CO₂ removal systems that reduce or eliminate other system components, increase system efficiency, and/or otherwise simplify the purification of a H₂-rich synthesis gas stream.

### BRIEF DESCRIPTION OF THE INVENTION

In view of the above embodiments of an adiabatic working system **1** for selective gas removal and hydrogen generation, and methods for using the same are provided. Further aspects, advantages and features of the present invention are apparent from the dependent claims, the description and the accompanying drawings.

In one embodiment, the system for producing hydrogen generation gas and for carbon dioxide capture from syngas can comprise: a quench unit **3** configured to receive a fluid stream of syngas from an external syngas source via inlet **2** and to saturate the syngas with water vapour; two heat exchangers **5** and **7** which are configured to preheat the syngas; a water gas shift reactor WGSR comprising (i) at least one catalyst configured to convert CO to CO₂ and a membrane **10** which is configured to selectively remove CO₂ from the reaction mixture and (ii) an evacuation chamber **11** which is configured to cool the CO₂ which is released from at least one CO₂-selective membrane section. The membrane is cooled with a cooling medium and the heat which is transferred from the membrane and the WGS reactor to the fluid is transported in a cooling loop **14** to heat exchanger **7** to preheat the syngas which results from the quench unit. The CO₂ that results from the membrane separation step is transported from the evacuation chamber **11** to heat exchanger **5.** Accordingly, the syngas which results from the quench unit is heated up within two steps when passing the heat exchangers **5** and **7** using the heat which results from the exothermic water gas shift reaction. Instead of one heat exchanger 5 or 7, there may be used a plurality of devices for exchanging heat.

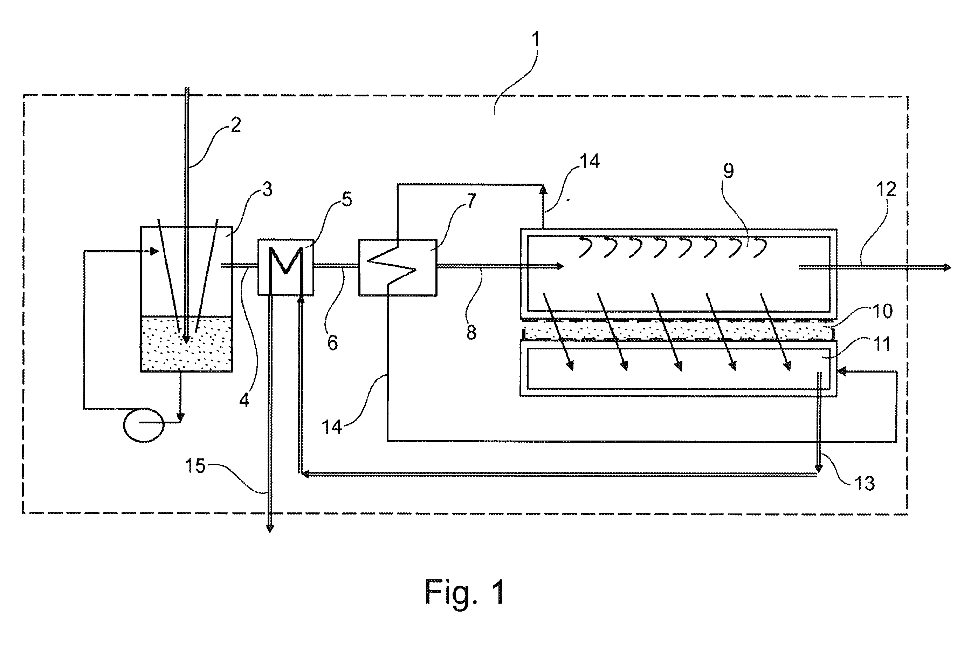

Accordingly, one embodiment relates to an adiabatic integrated water gas shift - carbon dioxide removal system comprising
a quench unit **3** configured to receive a fluid stream of syngas from an external syngas source and to saturate the syngas with water vapour;
a flow path **4** for directing the water saturated syngas from the quench unit to heat exchanger **5;**
a first heat exchanger **5,** which is configured to preheat the syngas;
a flow path **6** for directing the water saturated syngas from the first heat exchanger 5 to heat exchanger **7;**
a second heat exchanger **7,** which is configured to preheat the syngas;
a flow path **8** for directing the water saturated syngas to an integrated WGS-CO₂ removal reactor **9;**
an integrated water gas shift reactor comprising
at least one catalyst configured to convert CO to CO₂ and a membrane, which is configured to selectively remove CO₂ from the reaction mixture and to release the CO₂ or a CO₂- containing gas mixture to the evacuation chamber **11;**
a cooling device (not shown in Fig. 1) which is configured for cooling the water gas shift reactor, the membrane, and the evacuation chamber **11** and which is in fluid communication with the cooling loop **14;**
a cooling loop **14** for directing the cooling fluid from the integrated water gas shift reactor to the second heat exchanger **7** and after heat exchange back to integrated water gas shift reactor; a flow path **12** for directing the CO₂ from the evacuation chamber to the first heat exchanger **5.**

In a further embodiment, the quench unit **3** provides a cold sink in the above adiabatic integrated water gas shift-carbon dioxide removal system.

In a further embodiment the above adiabatic integrated water gas shift-carbon dioxide removal system is combined with a hydrogen reformer or a hydrogen gasifier.

In a further embodiment the adiabatic integrated water gas shift-carbon dioxide removal system in an integrated water gas shift-carbon dioxide removal reactor has at least two conversion-removal zones.

Another embodiment relates to a method for increasing the efficiency of an integrated water gas shift-carbon dioxide removal system comprising:
producing a water saturated syngas stream using a quench unit **3;** preheating the water saturated syngas in a first heat exchanger **5** up to a first temperature, heating the resulting preheated syngas by a second heat exchanger **7** up to a second temperature which is higher than the first temperature; producing a water gas stream in an integrated water gas shift-carbon dioxide removal reactor **9** and separating at least carbon dioxide from the reactions mixture by membrane **10;** directing the carbon dioxide product stream from the evacuation chamber **11** of the integrated water gas shift-carbon dioxide removal reactor **9** to the first heat exchanger **5** to preheat the water saturated syngas up to a first temperature; cooling the integrated water gas shift-carbon dioxide removal reactor with a cooling medium and heating the preheated syngas up to second temperature by directing the heated cooling medium to the heat exchanger **7;** and directing the cooling medium back to the integrated water gas shift-carbon dioxide removal reactor by the cooling loop **14.**

In a further embodiment, the syngas stream that is directed to the quench unit **3** is prepared from fluid hydrocarbonaceous fuel, gaseous hydrocarbons or solid carbonaceous materials as well as combinations comprising at least one of the foregoing.

In a further embodiment, the water saturated syngas enters the first heat exchanger 5 having a temperature in the range of 100 - 200 °C.

In a further embodiment the water saturated syngas enters the integrated water gas shift-carbon dioxide removal reactor **9** having a temperature in the range of 250 - 350 °C.

An exemplary embodiment of an integrated, adiabatic WGS-CO₂ removal system is described in detail below. The adiabatic integrated WGS-CO₂ removal system is not limited to the specific embodiments described herein, but rather, components of the clean-up section may be utilized independently and separately from other components described herein. Furthermore, the need to remove CO₂ is not unique to coal- or natural gas-derived plants, and as such, the integrated, adiabatic WGS-CO₂ removal system could be used for alternative fuel or biomass systems to convert low-value syngas to high-purity H₂. Therefore, the apparatus and method can be implemented and utilized in connection with many other fuel systems and turbine configurations.

### BRIEF DESCRIPTION OF THE DRAWING

A full and enabling disclosure of the subject matter of the subject matter disclosed herein, including the best mode thereof, to one of ordinary skill in the art, is set forth more particularly in the remainder of the specification, including reference to the accompanying figure.

Figure 1 is a schematic view of an integrated WGS-CO₂ removal reactor, which is put in place upstream according to one embodiment of the present invention.

### DETAILED DESCRIPTION OF THE INVENTION

Reference will now be made in detail to the various embodiments of the invention, one or more examples of which are illustrated in the figures. Each example is provided by way of explanation of the invention, and is not meant as a limitation of the invention. For example, features illustrated or described as part of one embodiment can be used on or in conjunction with other embodiments to yield yet a further embodiment. It is intended that the present invention includes such modifications and variations.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

As summarized above, novel adiabatic working systems for selective gas removal and hydrogen generation, and methods for using the same are disclosed.

Production and purification of a hydrogen stream, and, in particular, the conversion of carbon monoxide to carbon dioxide, and the removal of the carbon dioxide, can be expensive and inefficient.

Fig. 1 is a schematic view of an adiabatic integrated WGS-CO₂ removal system **1** with an adiabatic quench unit **3,** which is put in place upstream. The area of the adiabatic working integrated WGS-CO₂ removal system which is narrowed down by the border line "adiabatic boundary" represents an area which apart from the heat content of syngas stream which enters the system via inlet **2** does not require any additional heat input into the interior zone of the boundary. The heat which is rejected in the integrated WGS-CO₂ removal reactor **9** to the active cooling loop **14** is used to preheat the incoming saturated syngas feed to the WGS reactor. The integrated WGS-CO₂ removal reactor comprises the WGS reactor, a membrane and an evacuation chamber **11.** The hot CO₂ which is removed from the integrated WGS-CO₂ removal reactor **9** is also cooled against the reactor inlet. A quench unit **3** provides this cold sink while also saturating and cleaning the incoming syngas. In this way the integrated WGS-CO₂ removal reactor **9** operates at close to isothermal conditions and this plant area is adiabatic and, thus, additional heat integration with other parts of the plant is not necessary.

Particularly, the heat integration combined with a quench unit **3** allows the following:
(i) The plant area is adiabatic, requiring no further heat integration into the plant. Hence complex and costly layouts are avoided.
(ii) The syngas entering the WGS-CO₂ removal reactor **9** has an elevated level of water vapour, increasing CO₂ and H₂ yields.
(iii) The WGS-CO₂ removal reactor **9** is kept isothermal, increasing also CO₂ and H₂ yields and reducing thermal stresses on the membrane.
(iv) The heat balance for a natural gas-based syngas is such that the plant area is adiabatic while producing a syngas of moderately high temperature (∼300 °C), which improves the combined cycle efficiency while keeping piping material requirements reasonable.
(v) The fuel gas produced has an elevated level of water vapour, which leads to a NOₓ reduction during combustion.

As can be seen from Fig. 1, hot syngas from a syngas generation unit or from a gasification feed stock first enters an adiabatic quench unit 3. Syngas represents a gas mixture that contains varying amounts of carbon monoxide and hydrogen generated by the gasification or reforming of a carbon-containing fuel to a gaseous product with a heating value. Examples include steam reforming of natural gas or liquid hydrocarbons to produce hydrogen, the gasification of coal and in some types of waste-to-energy gasification facilities. The syngas may - depending on its source or manufacture - include other gaseous compounds like methane, nitrogen, hydrogen sulfide etc.

Gasification feedstock (e.g., that provide a source of hydrogen and carbon for partial oxidation processes) include fluid hydrocarbonaceous fuel (e.g., a composition comprising hydrocarbon compound(s) in a fluid, (i.e. gaseous, liquid or fluidized solid state), and solid carbonaceous material, as well as combinations comprising at least one of the foregoing. Fluid hydrocarbonaceous fuels include petroleum products (including distillates and residues, such as crude petroleum, reduced crude, gasoline, naphtha, kerosene, crude petroleum asphalt, gas oil, residual oil, tar sand oil, shale oil, cycle gas oil, oil derived from coal, lignite, aromatic hydrocarbons (such as benzene, toluene, and xylene fractions), coal tar, and furfural extract of coke or gas oil); oxygenated hydrocarbonaceous organic materials (including carbohydrates, cellulosics, aldehydes, organic acids, alcohols, ketones, and oxygenated fuel oil); waste liquid and by-products from chemical processes containing oxygenated hydrocarbonaceous organic materials; gaseous hydrocarbons (including natural gas, refinery offgases or other gas streams containing hydrogen and/or saturated or unsaturated hydrocarbons like methane, ethane, ethene (ethylene), propane, propene, and so on); waste gases including organic nitrogen, sulfur or oxygen compounds; and other suitable materials, as well as combinations comprising at least one of the foregoing.

Another suitable feedstock is solid carbonaceous material, i.e., a composition comprised of one or more solid carbon-containing compounds. Solid carbonaceous material includes coal (such as anthracite, bituminous, subbituminous); coke from coal; lignite, residue derived from coal liquefication; crude residue from petroleum distillation and cracking processes; oil shale; tar sand; petroleum coke; asphalt; pitch; particulate carbon (soot); concentrated sewer sludge: tank and pond bottoms: separator sludge; air flotation solids; and other suitable materials, as well as combinations comprising at least one of the foregoing materials. Some possible feedstock is disclosed in U.S. Patent No. 5,441,990.

The system according to the present application can be fed with syngases of very different gas compositions. Thus, the partial concentrations of the constituents may vary over a broad range. For example, a typical synthesis gas composition from an air-blown natural gas reformer (vol-%, not accounting for minor constituents, eg like methane) is as follows: H₂: 35 %, N₂: 25 %, CO: 25 %, CO: 10 % and H₂O: 25%. Another typical synthesis gas composition from an oxygen-blown coal gasifier (vol-%, not accounting for minor constituents, eg like methane): H₂: 35 % , CO₂: 15 %, CO: 35 %, H₂O: 15 % (no nitrogen). In quench unit **3**, syngas is cleaned from particles and the heat in the syngas pathway is used to saturate the syngas with water vapor. Regarding the water (H₂O vapor) content, it is to be noted that higher water content drives the WGS reaction to higher hydrogen H₂ and CO₂ yields. However, the molar ratio of H₂ to CO in the product syngas is highly dependent on the feedstock and gasification process used therein,

On the other hand, the molar ratio of water to carbon monoxide of the syngas feed is an important parameter for proper operation of the water gas shift reaction section. A high H₂O:CO molar ratio, for example about 1.5:1 to about 3:1, is useful to help control the temperature increase from the exothermic heat of reaction and to limit side reactions such as methanation. The H₂O:CO molar ratio present in the syngas is dependent both on its method of production and on the operating parameters for that particular method. In addition, when syngas is used as a fuel for power plants, the presence of water in the syngas is sometimes desirable to retard fouling of the combustion turbine and other equipment.

For example, the amount of water present in a raw syngas produced by gasification is in part dependent on the feed method to the gasifier (e.g., water slurry or dry feed of the carbonaceous feedstock), the gasifier type, operating conditions, and the method used to cool the raw syngas from a gasification process. Often in water slurry-fed gasifiers, there is insufficient water in the cooled syngas effluent from the gasifier to operate a water gas shift reaction at the desired conversion. With dry coal feed gasifiers, the water content in the raw syngas is even lower than with a water slurry feed method.

Thus, the syngas is humidified in a quench unit **3** which will provide a wide range of H₂O:CO molar ratios for the water gas shift reaction. Moreover, the increase in water content drives the WGS reaction to higher H₂ and CO₂ yields. The quench units which are useful to achieve this high water content of the syngas are well known from the state of the art.

According to one embodiment, the water-saturated syngas which is flowing out from the quencher unit having a temperature in the range of about 100 to 300 °C is directed along the flow path **4** to heat exchanger **5.** The syngas is firstly preheated in heat exchanger **5** before it is directed along flow path **6** to the second heat exchanger **7** where the syngas is heated up in a second step using the heat which is generated by the WGS reaction including by the cooling of the membrane.

In the first heat exchanger the syngas is heated up by the CO₂ - and optionally other gaseous substances - which exit(s) the evacuation chamber **11** and which is/are directed along flow path **12** into heat exchanger **5.** The CO₂ or the carbon dioxide containing gas mixture - and the other gases like N-oxides or H₂S which may be present the starting gas mixture, or which are side products of the WGS reaction, or represent the sweep gas which is fed into the membrane section(s)- is usually released from the evacuation chamber **11** having a temperature which is in the range of 300 - 350 °C at a pressure of - for example - up to 20 bar depending on the reactor feed pressure and membrane characteristics and is directed to heat exchanger **7** along flow path **6.** The preheated syngas enters the second heat exchanger **7** and is heated up by the heat which is transported by a cooling medium in the cooling fluid loop **14** from the WGS reactor. The cooling medium is directed along the cooling fluid loop **14** from the WGS reactor including the membrane which forms an integrated part of the reactor and from the evacuation chamber **11** which is also a part of the WGS reactor to the heat exchanger **7.** By heat exchanging, the syngas is finally heated up to a temperature which is for example in the range of 200 - 310 °C, whereas the cooling fluid is transported back to the WGS reactor. The cooling media which can be used for this purpose are well known from the state of the art. They comprise for example thermal oils or high pressure (HP) water.

The preheated syngas is directed into the water gas shift-CO₂ removal reactor along flow path **8.** The preheated syngas enters the integrated WGS-CO₂ removal reactor, where CO is combined with water and a catalyst to produce H₂ and CO₂ at the above given temperature. However, the preheated syngas can enter the WGS reactor **9** at any appropriate temperature, pressure, and flow rate that is specific to the water gas shift reactor. WGS reactors - particularly integrated WGS reactors - are known from the state of the art, in particular from EP 1 920 827 A1 [paragraphs 0018 - 0030 and Figs. 1 and 2].

As the syngas is contacted with the catalyst, the exothermal water gas shift reaction (CO + H₂O <=> CO₂ + H₂) converts CO to CO₂. The catalyst(s) can comprise the same or different shift reactor catalyst(s) that are configured to convert CO to CO₂ and which are well known from the state of the art. Possible catalysts include for example iron (Fe), nickel (Ni), a noble metal catalyst such as palladium (Pd), platinum (Pt), rhodium (Rh), as well as combinations comprising at least one of the foregoing catalysts, such as ferro-chromium (Fe-Cr) alloys, platinum-rhenium (Pt-Re) alloys, and so forth. These catalysts can be supported on high surface area ceramics such as cerium oxide (CeO₂), zirconium oxide, aluminum oxide (Al₂O₃), cordierite, as well as combinations comprising at least one of the foregoing supports.

According to one embodiment, the integrated WSG-CO₂ removal reactor **9** includes at least two conversion-removal zones. Each conversion-removal zone comprises a catalyst section configured to convert CO to CO₂ and a membrane section which is located downstream of, and in flow communication with the catalyst section. In the exemplary embodiment, the first and the second catalyst section comprises iron, while the third - and optionally fourth - catalyst section comprises for example palladium. The catalyst sections and the membrane sections can be disposed in a spaced relation to one another (i.e., not in physical contact with the subsequent or prior portion), e.g., to inhibit thermal transfer between the catalyst section and membrane section, and to enable thermal dissipation. The membrane section is configured to selectively remove CO₂. As already indicated above, such a type of WGS-CO₂ removal reactor is disclosed in EP-A-1 920 827. However, all other types of integrated WGS reactors can be used.

Since the membrane(s) of the membrane sections is/are CO₂ selective they continuously remove the CO₂ which is produced in the catalyst sections. Accordingly, the equilibrium conversion of CO to CO₂ is shifted to proceed to nearly complete CO conversion. Furthermore, the membrane material can be chosen such that one or more membrane sections comprise a different composition, depending upon the particular membrane section's operating temperature range. For example, the first membrane section can comprise a ceramic-based membrane that is operable at a temperature of about 250 °C to about 500 °C (e.g., about 300 °C to about 450 °C), the next (e.g., second) membrane section can comprise the same or a different ceramic-based membrane that is operable at a temperature of about 200 °C to about 400 °C (e.g., about 250 °C to about 350 °C), while the next (e.g., third or last) membrane section can comprise a ceramic-based membrane, polymer-based membrane, or a hybrid membrane that is operable at a temperature of about 20 °C to about 250 °C (e.g., about 50 °C to about 150 °C for ceramic-based membrane, polymer-based membrane, or a hybrid membrane, and ceramic-based membrane for temperatures of about 175 °C to about 250 °C).

Useful membrane materials that are selective for CO₂ include certain inorganic and polymer materials, as well as combinations comprising at least one of the following materials. All these materials are well known from the state of the art.

Inorganic materials include microporous silica, microporous mixed oxide, and zeolite materials, as well as combinations comprising at least one of these materials. Some possible membrane materials are described in WO-A-2007/037933.

While not to be limited by a particular theory, mechanisms for CO₂ selectivity in microporous materials include surface diffusion and capillary condensation. A material that has an affinity for CO₂ relative to other gases in a stream will show a preferred adsorption and surface diffusion of CO₂. Furthermore, the presence of the adsorbed CO₂ molecules, through capillary condensation, will effectively block the pore from the more weakly adsorbing gases, thereby hindering their transport. The gas selectivity through the membrane is determined by the relative contributions of Knudsen flow and surface diffusion to the total transport of gas. For example, to achieve CO₂ selectivity, surface diffusion must make a significant contribution to the total CO₂ transport. The rate of surface diffusion depends on the amount of CO₂ adsorbed and its relative mobility.

In an exemplary embodiment, the ceramic represents a material such as SiO₂, BaTiO₃, BaZrO₃, LaFeO₃, as well as combinations representing at least one of these materials. These oxides theoretically show substantially high mobility for surface diffusion of CO₂ and hence may provide the required permeability.

Membranes that are selective for CO₂ at lower temperatures can include polymeric materials such as polyethers and polyether blends and hybrid membranes such as silanized gamma-alumina membranes. Silanes, such as 2-acetoxyethyl, 2-carbomethoxyethyl and 3-aminopropyl, can be integrated with ceramic membranes to achieve selective CO₂ transport. Moreover, other novel compositions for use in such membranes are known from the state of the art. The compositions are disclosed in US 7 011 694 B1 [column 5, line 25 - column 7, line 3].

In practice, the membrane can be built up by a separation layer that is disposed upon a support layer. For asymmetric inorganic membranes, the porous support can exhibit a material that is different from the separation layer. Support materials for asymmetric inorganic membranes include porous alumina, titania, cordierite, carbon, silica glass (e.g., Vycor), and metals, as well as combinations comprising at least one of these materials. Porous metal support layers include ferrous materials, nickel materials, and combinations comprising at least one of these materials, such as stainless steel, iron-based alloys, and nickel-based alloys. Polymeric membranes can be disposed on polymeric or inorganic supports.

An inlet sweep gas passes through the membrane sections to remove the carbon dioxide. This sweep gas can be of a lower temperature than the syngas stream (e.g., greater than or equal to about 100 °C lower than the syngas stream temperature) such that the sweep gas removes the CO₂ and heat from the reactor. Sufficient cooling can be attained to further enhance WGS reaction driving force for maximum CO conversion without employing a separate heat exchanger, thereby reducing the reactor complexity and cost.

Additionally, the H₂ stream exiting the reactor can have a higher temperature (e.g., about 250 °C to about 350 °C) than hydrogen streams exiting non-integrated WGS/CO₂ separation systems (e.g., about ambient temperature (about 20°C to about 50 °C).

The increased operating temperature of the syngas cleanup and CO₂ removal process and, thus, the higher temperature of the H₂ stream exiting the reactor reduces energy losses associated with cooling and reheating that are typically required for conventional CO₂ removal technology, which operates and produces a H₂ stream at about room temperature (e.g., about 30 °C).

Another embodiment is the use of an adiabatic water gas shift - carbon dioxide removal system for the synthesis of preheated water gas.

Furthermore, all embodiments or aspects described above may be combined with each other.

### Example 1

According to this Example, syngas comprising H₂, CO₂, CH₄, H₂O and N₂ (the latter would be present in air-blown but only to a very limited extend in oxygen-blown syngas generation) from an external gasifier or reformer is fed via inlet **2** to quench unit **3** at a temperature in the range of 200 to 800 °C and a pressure of 26 bar. In the quench unit the syngas is saturated with water. The saturated syngas is released to the first heat exchanger via flow pass **4** at a temperature in the range of 100 to 200 °C. In the first heat exchanger the saturated syngas is preheated by heat exchanging with the carbon dioxide which is - together with other gases - removed from the integrated WGS reactor **9.** This gas mixture is directed via flow pass path **13** to the first heat exchanger **5**. Carbon dioxide or the gas mixture leaves the evacuation chamber **11** having a temperature in the range of 300 to 350 °C and a pressure of 20 bar. After heat exchanging the carbon dioxide/gas mixture leaves heat exchanger **7** having a temperature in the range of 150 to 220 °C and is directed via outlet **15** out of the system. The preheated saturated syngas is fed via flow pass **6** to the second heat exchanger **7** where it is heated by the medium in the cooling loop **14** up to a temperature in the range of 230 to 310 °C. The medium or cooling fluid in the cooling loop **14** may be thermal oil or HP water. The heated syngas is fed via flow path **8** into the water gas shift reactor **9** having at least one membrane (10) and an evacuation chamber **11.** The resulting water gas (consisting mainly of H₂, N₂ - in the case of air-blown reforming or gasification - and H₂O) has a temperature in the range of 300 to 350 °C and is directed via flow path **12** to further reactions.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from essential scope thereof. Therefore, it is intended that the invention not be limited to the particular embodiment disclosed as the best mode contemplated for carrying out this invention, but that the invention will include all embodiments falling within the scope of the appended claims.

Ranges disclosed herein are inclusive and combinable (e.g., ranges of "up to about 25 wt%, or, more specifically, about 5 wt% to about 20 wt%", is inclusive of the endpoints and all intermediate values of the ranges of "about 5 wt% to about 25 wt%," etc.). "combination" is inclusive of blends, mixtures, alloys, reaction products, and the like. Furthermore, the terms "first," "second," and the like, herein do not denote any order, quantity, or importance, but rather are used to distinguish one element from another, and the terms "a" and "an" herein do not denote a limitation of quantity, but rather denote the presence of at least one of the referenced item. The modifier "about" used in connection with a quantity is inclusive of the state value and has the meaning dictated by context, (e.g., includes the degree of error associated with measurement of the particular quantity). The suffix "(s)" as used herein is intended to include both the singular and the plural of the term that it modifies, thereby including one or more of that term (e.g., the catalyst(s) includes one or more catalysts). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments.

## Claims

1. An adiabatic integrated water gas shift - carbon dioxide removal system (1) comprising
a quench unit (3) configured to receive a fluid stream of syngas from an external syngas source and to saturate the syngas with water vapour;
a flow path (4) for directing the water saturated syngas from the quench unit to heat exchanger (5);
a first heat exchanger (5) which is configured to preheat the syngas;
a flow path (6) for directing the water saturated syngas from the first heat exchanger (5) to a second heat exchanger (7);
a second heat exchanger (7) which is configured to preheat the syngas;
a flow path (8) for directing the water saturated syngas to an integrated WGS-CO₂ removal reactor (9);
an integrated water gas shift reactor comprising
at least one catalyst configured to convert CO to CO₂ and a membrane (10) which is configured to selectively remove CO₂ from the reaction mixture and to release the CO₂ or a CO₂-containing gas mixture to the evacuation chamber (11);
a device which is configured for cooling the water gas shift reactor the membrane and the evacuation chamber (11) and which is in fluid communication with the cooling loop (14);
a cooling loop (14) for directing the cooling fluid from the integrated water gas shift reactor to the second heat exchanger (7) and after heat exchange back to integrated water gas shift reactor;
a flow path (13) for directing the CO₂ from the evacuation chamber to the first heat exchanger (5).

2. The adiabatic integrated water gas shift-carbon dioxide removal system in accordance with claim 1, wherein the quench unit (3) provides a cold sink.

3. The adiabatic integrated water gas shift-carbon dioxide removal system in accordance with claim 1 or 2, wherein the system is combined with a hydrogen reformer or a hydrogen gasifier.

4. The adiabatic integrated water gas shift-carbon dioxide removal system in accordance with one of claims 1 to 3, wherein the integrated water gas shift-carbon dioxide removal reactor has at least two conversion-removal zones.

5. A method for increasing the efficiency of an integrated water gas shift-carbon dioxide removal system (1) comprising
producing a water saturated syngas stream using a quencher unit (3); preheating the water saturated syngas in a first heat exchanger (5) up to a first temperature, heating the resulting preheated syngas by a second heat exchanger (7) up to a second temperature which is higher than the first temperature; producing a water gas stream in an integrated water gas shift-carbon dioxide removal reactor (9) and separating at least carbon dioxide from the reactions mixture by membrane (10); directing the carbon dioxide product stream from the evacuation chamber (11) of the integrated water gas shift-carbon dioxide removal reactor (9) to the first heat exchanger (5) to preheat the water saturated syngas up to a first temperature; cooling the integrated water gas shift-carbon dioxide removal reactor with a cooling medium and heating the preheated syngas up to second temperature by directing the heated cooling medium to the heat exchanger (7); and directing the cooling medium back to the integrated water gas shift-carbon dioxide removal reactor by the cooling loop (14).

6. The method of claim 5, wherein the syngas stream that is directed to the quench unit is prepared from fluid hydrocarbonaceous fuel, gaseous hydrocarbons or solid carbonaceous materials as well as combinations comprising at least one of the foregoing.

7. The method according to claim 5 or 6 wherein the water saturated syngas enters the first heat exchanger (5) having a temperature in the range of 100 - 200 °C.

8. The method according to claim 5 or 6 wherein the water saturated syngas enters the integrated water gas shift-carbon dioxide removal reactor having a temperature in the range of 250 - 310 °C.

9. Use of an adiabatic water gas shift - carbon dioxide removal system according to one of claims 1 to 4 for the synthesis of water gas.

## Patentansprüche

1. Adiabatisches System (1) zur integrierten Wassergas-Shiftrektion und Kohlenstoffdioxidentfernung, umfassend
eine Abschreckeinheit (3), konfiguriert zum Empfangen eines fluiden Stromes von Synthesegas aus einer externen Synthesegasquelle und zum Sättigen des Synthesegases mit Wasserdampf;
einen Strömungspfad (4) zum Dirigieren des Wassergesättigten Synthesegases von der Abschreckeinheit zum Wärmeaustauscher (5);
einen ersten Wärmeaustauscher (5), der zum Vorerhitzen des Synthesegases konfiguriert ist;
einen Strömungspfad (6) zum Dirigieren des Wassergesättigten Synthesegases von dem ersten Wärmeaustauscher (5) zu einem zweiten Wärmeaustauscher (7);
einen zweiten Wärmeaustauscher (7), der zum Vorerhitzen des Synthesegases konfiguriert ist;
einen Strömungspfad (8) zum Dirigieren des Wassergesättigten Synthesegases zu einem integrierten WGS-CO₂-Entfernungsreaktor (9);
einen integrierten Wassergasshift-Reaktor, umfassend
mindestens einen Katalysator, der zum Umwandeln von CO in CO₂ konfiguriert ist, und eine Membran (10), die zum selektiven Entfernen von CO₂ aus der Reaktionsmischung und zur Abgabe des CO₂ oder einer CO₂ enthaltenden Gasmischung an eine Evakuierungskammer (11) konfiguriert ist;
eine Vorrichtung, die zum Kühlen des Wassergasshift-Reaktors, der Membran und der Evakuierungskammer (11) konfiguriert ist und die sich in Strömungsverbindung mit der Kühlschlaufe (14) befindet;
eine Kühlschlaufe (14) zum Dirigieren des Kühlströmungsmittels von einem integrierten Wassergasshift-Reaktor zu dem zweiten Wärmeaustauscher (7) und nach dem Wärmeaustausch zurück zum integrierten Wassergasshift-Reaktor;
einen Strömungspfad (13) zum Dirigieren des CO₂ von der Evakuierungskammer zu dem ersten Wärmeaustauscher (5).

2. Adiabatisches System (1) zur integrierten Wassergasshiftreaktion und Kohlenstoffdioxidentfernung gemäß Anspruch 1, worin die Abschreckeinheit (3) eine Kältesenke bereitstellt.

3. Adiabatisches System (1) zur integrierten Wassergasshiftreaktion und Kohlenstoffdioxidentfernung nach Anspruch 1 oder 2, worin das System mit einem Wasserstoffreformer oder einem Wasserstoffvergaser kombiniert ist.

4. Adiabatisches System (1) zur integrierten Wassergasshiftreaktion und Kohlenstoffdioxidentfernung nach einem der Ansprüche 1 bis 3, worin der Reaktor zur integrierten Wassergasshiftreaktion und
Kohlenstoffdioxidentfernung mindestens zwei Umwandlungs-Entfernungs-Zonen aufweist.

5. Verfahren zum Erhöhen der Wirksamkeit eines Systems (1) zur integrierten Wassergasshiftreaktion und Kohlenstoffdioxidentfernung, umfassend
Erzeugen eines wassergesättigten Synthesegasstroms unter Einsatz einer Abschreckeinheit (3);
Vorerhitzen des wassergesättigten Synthesegases in einem ersten Wärmeaustauscher (5) bis zu einer ersten Temperatur,
Erhitzen des resultierenden vorerhitzten Synthesegases durch einen zweiten Wärmeaustauscher (7) bis zu einer zweiten Temperatur, die höher als die erste Temperatur ist;
Erzeugen eines Wassergasstromes in einem Reaktor (9) zur integrierten Wassergasshiftreaktion und Kohlenstoffdioxidentfernung und Abtrennen mindestens des Kohlenstoffdioxids von der Reaktionsmischung durch Membran (10);
Richten des Kohlenstoffdioxidprodukt-Stromes von der Evakuierungskammer (11) des Reaktors (9) zur integrierten Wassergasshiftreaktion und Kohlenstoffdioxidentfernung zu dem ersten Wärmeaustauscher (5) zum Vorerhitzen des wassergesättigten Synthesegases bis zu einer ersten Temperatur;
Kühlen des Reaktors zur integrierten Wassergasshiftreaktion und Kohlenstoffdioxidentfernung mit einem Kühlmedium und Erhitzen des vorerhitzten Synthesegases bis zu einer zweiten Temperatur durch Dirigieren des erhitzten Kühlmediums zu dem Wärmeaustauscher (7) und
Richten des Kühlmediums zurück zu dem Reaktor zur integrierten Wassergasshiftreaktion und Kohlenstoffdioxidentfernung durch die Kühlschlaufe (14).

6. Verfahren nach Anspruch 5, worin der Synthesegasstrom, der zu der Abschreckeinheit gerichtet wird, aus einem fluiden kohlenwasserstoffhaltigen Brennstoff, gasförmigen Kohlenwasserstoffen oder festen kohlenstoffhaltigen Materialien ebenso wie Kombinationen hergestellt wird, die mindestens eines der Vorhergehenden umfassen.

7. Verfahren nach Anspruch 5 oder 6, worin das wassergesättigte Synthesegas in den ersten Wärmeaustauscher (5) eintritt, der eine Temperatur in dem Bereich von 100-200°C aufweist.

8. Verfahren nach Anspruch 5 oder 6, worin das wassergesättigte Synthesegas in den Reaktor zur integrierten Wassergasshiftreaktion und Kohlenstoffdioxidentfernung eintritt, der eine Temperatur in dem Bereich von 250-310°C aufweist.

9. Anwendung eines adiabatischen Systems zur Wassergasshiftreaktion und Kohlenstoffdioxidentfernung nach einem der Ansprüche 1 bis 4 zur Synthese von Wassergas.

## Revendications

1. Système adiabatique intégré de conversion à la vapeur d'eau et d'élimination de dioxyde de carbone (1), comprenant
une unité de refroidissement rapide (3) configurée pour recevoir un courant fluide de gaz de synthèse en provenance d'une source externe de gaz de synthèse et pour saturer le gaz de synthèse avec de la vapeur d'eau;
un chemin d'écoulement (4) pour acheminer le gaz de synthèse saturé en eau depuis l'unité de refroidissement rapide jusqu'à un échangeur de chaleur (5);
un premier échangeur de chaleur (5) qui est configuré pour préchauffer le gaz de synthèse;
un chemin d'écoulement (6) pour acheminer le gaz de synthèse saturé en eau depuis le premier échangeur de chaleur (5) jusqu'à un deuxième échangeur de chaleur (7);
un deuxième échangeur de chaleur (7) qui est configuré pour préchauffer le gaz de synthèse;
un chemin d'écoulement (8) pour acheminer le gaz de synthèse saturé en eau jusqu'à un réacteur intégré de conversion à la vapeur d'eau (WGS) et d'élimination de CO₂ (9);
un réacteur intégré de conversion à la vapeur d'eau comprenant
au moins un catalyseur configuré pour convertir du CO en CO₂, et une membrane (10) qui est configurée pour éliminer de façon sélective du CO₂ du mélange réactionnel et pour envoyer le CO₂ ou un mélange gazeux contenant du CO₂ à la chambre d'évacuation (11);
un dispositif qui est configuré pour refroidir le réacteur de conversion à la vapeur d'eau, la membrane et la chambre d'évacuation (11), et qui est en communication de fluide avec la boucle de refroidissement (14);
une boucle de refroidissement (14) pour acheminer le fluide de refroidissement depuis le réacteur intégré de conversion à la vapeur d'eau jusqu'au deuxième échangeur de chaleur (7) et, après l'échange de chaleur, de nouveau jusqu'au réacteur intégré de conversion à la vapeur d'eau;
un chemin d'écoulement (13) pour acheminer le CO₂ de la chambre d'évacuation jusqu'au premier échangeur de chaleur (5).

2. Système adiabatique intégré de conversion à la vapeur d'eau et d'élimination de dioxyde de carbone selon la revendication 1, dans lequel l'unité de refroidissement rapide (3) constitue un puits froid.

3. Système adiabatique intégré de conversion à la vapeur d'eau et d'élimination de dioxyde de carbone selon la revendication 1 ou 2, dans lequel le système est combiné avec un reformeur d'hydrogène ou un gazéifieur d'hydrogène.

4. Système adiabatique intégré de conversion à la vapeur d'eau et d'élimination de dioxyde de carbone selon l'une des revendications 1 à 3, dans lequel le réacteur intégré de conversion à la vapeur d'eau et d'élimination de dioxyde de carbone présente au moins deux zones de conversion-élimination.

5. Procédé pour augmenter le rendement d'un système intégré de conversion à la vapeur d'eau et d'élimination de dioxyde de carbone (1), comprenant :
la production d'un courant de gaz de synthèse saturé en eau, en utilisant une unité de refroidissement rapide (3); le préchauffage du gaz de synthèse saturé en eau, dans un premier échangeur de chaleur (5), jusqu'à une première température, le chauffage du gaz de synthèse préchauffé qui en résulte, par un deuxième échangeur de chaleur (7), jusqu'à une deuxième température qui est supérieure à la première température; la production d'un courant de gaz à l'eau dans un réacteur intégré de conversion à la vapeur d'eau et d'élimination de dioxyde de carbone (9) et la séparation, au moins du dioxyde de carbone, du mélange réactionnel, à l'aide de la membrane; l'acheminement du courant de produit de dioxyde de carbone depuis la chambre d'évacuation (11) du réacteur intégré de conversion à la vapeur d'eau et d'élimination de dioxyde de carbone (9) jusqu'au premier échangeur de chaleur (5) pour préchauffer le gaz de synthèse saturé en eau, jusqu'à une première température; le refroidissement du réacteur intégré de conversion à la vapeur d'eau et d'élimination de dioxyde de carbone avec un fluide de refroidissement, et le chauffage du gaz de synthèse préchauffé, jusqu'à une deuxième température, en acheminant le fluide de refroidissement chauffé jusqu'à l'échangeur de chaleur (7); et l'acheminement de retour du fluide de refroidissement jusqu'au réacteur intégré de conversion à la vapeur d'eau et d'élimination de dioxyde de carbone, par la boucle de refroidissement (14).

6. Procédé selon la revendication 5, selon lequel le courant de gaz de synthèse, qui est acheminé vers l'unité de refroidissement rapide, est préparé à partir d'un combustible hydrocarboné fluide, d'hydrocarbures gazeux ou de matières carbonées solides ainsi que de combinaisons comprenant au moins une des matières précédentes.

7. Procédé selon la revendication 5 ou 6, selon lequel le gaz de synthèse saturé en eau entre dans le premier échangeur de chaleur (5) en présentant une température comprise dans la plage allant de 100 - 200 °C.

8. Procédé selon la revendication 5 ou 6, selon lequel le gaz de synthèse saturé en eau entre dans le réacteur intégré de conversion à la vapeur d'eau et d'élimination de dioxyde de carbone en présentant une température comprise dans la plage allant de 250 - 310°C.

9. Utilisation d'un système adiabatique de conversion à la vapeur d'eau et d'élimination de dioxyde de carbone selon une des revendications 1 à 4 pour la synthèse de gaz à l'eau.
